# EUROPEAN PATENT APPLICATION

(11) **EP 1 710 572 A1**
(43) Date of publication of application: **11.10.2006**
(21) Application number: 04807463.7
(22) Date of filing: 21.12.2004
(51) Int. Cl.: G01N 30/22, G01N 30/02, G01N 30/20, G01N 30/26, G01N 30/88

(54) **METHOD AND DEVICE FOR INJECTING SAMPLE**

(30) Priority: 13.01.2004 JP 2004005658
(71) Applicant: DAICEL CHEMICAL INDUSTRIES, LTD., Sakai-shi, Osaka 590-8501 (JP)
(72) Inventor: MATABE, Akihiro, 1140024 (JP)
(74) Representative: Grünecker, Kinkeldey, Stockmair & Schwanhäusser Anwaltssozietät
(86) International application number: PCT/JP2004/019106
(87) International publication number: WO 2005/073710

(57) **Abstract**

In a chromatography using a pressurized mobile phase, the mobile phase flowing through a feed pipe (31) is introduced into one end of a bypass pipe (32) where a sample is sealed through a two-way valve (v2), a two-way valve (v3) is opened and a two-way valve (v1) is closed when the sample is pressurized by the introduction of the mobile phase, all the pressurized sample is thereby injected into the feed pipe (31), and further the pressure variation of the mobile phase in the feed pipe is suppressed when the sample is injected.

## Description

### TECHNICAL FIELD

The present invention relates to a method and device for injecting a sample each of which is applied to a method involving injecting a sample into a pressurized mobile phase and separating a desired substance in the sample using a column such as high performance liquid chromatography or supercritical fluid chromatography.

### BACKGROUND ART

Various kinds of chromatography such as high performance liquid chromatography and supercritical fluid chromatography have been conventionally known as methods of separating a desired substance in a sample. Since such the chromatography is ordinarily performed under a pressurized condition, the sample is injected into a pressurized mobile phase in such the chromatography.

In the above-described chromatography, the pressure variation of the mobile phase greatly affects the efficiency of separation by the column. In view of this, a technique for suppressing a pressure variation upon injection of the sample has been conventionally proposed.

A known example of a technique described above involves: feeding a sample into a sample loop using a sample pump against the back pressure of a supercritical fluid to be fed by a supercritical fluid pump into a column in supercritical fluid chromatography to increase the pressure of the sample in the sample loop to be equal to the pressure of the supercritical fluid; connecting the sample loop to a flow path of the supercritical fluid from the supercritical fluid pump to the column after the increase; and sending the sample in the sample loop to the column using the supercritical fluid (see, for example, Japanese Patent Laid-Open Publication 05-307026).

The above-described technique is excellent in intermittent sending of an accurate amount of the sample to the column without the occurrence of any pressure variation. However, in order to increase the pressure of the sample in the sample loop, the sample is introduced into a flow path different from the flow path of the sample to the column so that the back pressure of the supercritical fluid is transmitted. Accordingly, an excessive sample not fed into the column is needed. The need results in a sample waste.

In addition, in the above-described technique, the sample is fed into the column using the sample pump. Accordingly, multiple pumps each capable of sending a liquid to the column are needed. The need involves the complication of the constitution of a chromatographic apparatus and the complication of the operation of the apparatus.

The above problems affect the productivity of a desired substance when producing the desired substance through separation using the chromatographic apparatus by increasing the scale of the chromatographic apparatus or the continuous operation of the chromatographic apparatus. As described above, the above-described technique is susceptible to investigation from the viewpoint of the industrial production of the desired substance by means of chromatography.

### DISCLOSURE OF THE INVENTION

An object of the present invention is to suppress a pressure variation upon injection of a sample using a simple constitution causing no sample waste in chromatography using a pressurized mobile phase.

In the present invention, upon injection of a sample into a pressurized mobile phase, the pressurized mobile phase is introduced into a pipe where the sample is sealed, the sample is pressurized by the introduced mobile phase, and then the sample is fed into a column together with the mobile phase.

Accordingly, the present invention relates to a method of injecting a sample comprising a desired substance into a pressurized mobile phase upon separation of the desired substance in the sample in the mobile phase by passage of the mobile phase through a column, wherein the method comprises the steps of: sealing the sample in a bypass pipe both ends of which are connected to a feed pipe for feeding the mobile phase into the column; pressurizing the sample sealed in the bypass pipe by opening one end of the bypass pipe to the feed pipe and by introducing the mobile phase from the feed pipe into the bypass pipe; and injecting the pressurized sample into the feed pipe by opening the other end of the bypass pipe to the feed pipe (hereinafter, also referred to as "injecting method").

The present invention also relates to a device for use in injection of a sample comprising a desired substance into a pressurized mobile phase upon separation of the desired substance in the sample in the mobile phase by passage of the mobile phase through a column, wherein the device comprises: a feed pipe for feeding the mobile phase into the column; a first flow path opening/closing device for opening and closing a flow path of the mobile phase formed by the feed pipe; a bypass pipe both ends of which are connected to the feed pipe on an upstream side and a downstream side with respect to the first flow path opening/closing device; second and third flow path opening/closing devices for opening and closing a flow path of the mobile phase formed by the bypass pipe; a sample feeding device for feeding the sample into the bypass pipe between the second and third flow path opening/closing devices; and a controlling device for controlling the first to third flow path opening/closing devices, wherein the controlling device controls the second flow path opening/closing device to open one end of the bypass pipe to the feed pipe, controls the third flow path opening/closing device to open the other end of the bypass pipe to the feed pipe after an inside of the bypass pipe has been pressurized, and controls the first flow path opening/closing device in a direction of closing the flow path of the mobile phase formed by the feed pipe (hereinafter, also referred to as "injection device").

### BRIEF DESCRIPTION OF THE DRAWINGS

[Fig. 1] A view showing a constitution of an injection device of an embodiment of the present invention.
[Fig. 2] A view showing a constitution of an example of a supercritical fluid chromatographic fractionation apparatus in which the injection device of the present invention is used.

### BEST MODE FOR CARRYING OUT THE INVENTION

A method of injecting a sample of the present invention includes the steps of: sealing the sample in a bypass pipe both ends of which are connected to a feed pipe for feeding a mobile phase into a column; pressurizing the sample sealed in the bypass pipe by opening one end of the bypass pipe to the feed pipe and by introducing the mobile phase from the feed pipe into the bypass pipe; and injecting the pressurized sample into the feed pipe by opening the other end of the bypass pipe to the feed pipe.

The sample is fed into the bypass pipe both ends of which are closed to the feed pipe in the step of sealing the sample. The bypass pipe can be blocked by using flow path opening/closing devices to be ordinarily used such as a glove valve and a cylinder operated valve, the flow path opening/closing devices being provided for two or more sites of the bypass pipe. Supply of the sample can be performed by feeding a desired amount of the sample by using a pump, an injector, or the like. Although the sample may be sealed in the bypass pipe itself in the step of sealing the sample, it is preferable to seal the sample in a sample storage portion such as a sample loop provided for the bypass pipe for injecting a constant amount of the sample into the feed pipe and for injecting a large amount of the sample into the feed pipe at a time.

In the step of pressurizing the sample, one end of the bypass pipe is opened to the feed pipe, and the mobile phase is introduced from the feed pipe. Thus, the sample in the bypass pipe is pressurized to have a pressure equal to the pressure of the mobile phase. The one end of the bypass pipe can be opened by using the flow path opening/closing device. The mobile phase can be pressurized by controlling the flow path opening/closing devices on the basis of a measured value for the pressure in the feed pipe and a measured value for the pressure in the bypass pipe, or in accordance with a time table set in such a manner that the sample is pressurized by the mobile phase for a sufficient time period. The one end of the bypass pipe to be opened in this step may be one end on an upstream side in the direction in which the mobile phase flows in the feed pipe, or may be one end on a downstream side in the direction.

In the step of injecting the sample into the feed pipe, the other end of the bypass pipe is additionally opened to the feed pipe, and the mobile phase is caused to flow in one direction in the bypass pipe. Thus, the sample in the bypass pipe is injected into the feed pipe. The other end of the bypass pipe can also be opened by using the flow path opening/closing device. The other end of the bypass pipe to be opened in this step has only to be an end portion opposite to the end portion of the bypass pipe opened in the step of pressurizing the sample. That is, the other end may be one end on the downstream side, or may be one end on the upstream side in the direction in which the mobile phase flows in the feed pipe. The sample can be injected into the feed pipe by causing the mobile phase to flow in the bypass pipe from the upstream side of the direction in which the mobile phase flows in the feed pipe to the downstream side of the direction. The direction in which the mobile phase flows in the bypass pipe, and the flow rate of the mobile phase can be regulated depending on the degree of opening of each of the flow path opening/closing devices in the feed pipe in parallel with the bypass pipe.

In the present invention, a flow path of the mobile phase or the like is opened or closed by the flow path opening/closing devices in such a manner that the pressure variation of the mobile phase in the feed pipe or in the bypass pipe is suppressed. For example, the flow path is opened or closed by the flow path opening/closing devices at such a slow speed that no pressure variation of the mobile phase in the feed pipe occurs.

The injection method of the present invention may further include any other step except the above-described steps. An example of the other step is the step of causing the pressure in the bypass pipe both ends of which are closed to escape after the sample has been injected into the feed pipe.

The injection method of the present invention can be performed by using an injection device of the present invention to be described below.

The injection device of the present invention comprises: a feed pipe for feeding a mobile phase into a column; a first flow path opening/closing device for opening and closing a flow path of the mobile phase formed by the feed pipe; a bypass pipe both ends of which are connected to the feed pipe on an upstream side and a downstream side with respect to the first flow path opening/closing device; second and third flow path opening/closing devices for opening and closing a flow path of the mobile phase formed by the bypass pipe; a sample feeding device for feeding a sample into the bypass pipe between the second and third flow path opening/closing devices; and a controlling device for controlling the first to third flow path opening/closing devices.

The feed pipe is a pipe for feeding the mobile phase into the column. An ordinary pipe to be used for feeding a pressurized mobile phase into a column in the above-described high performance liquid chromatography or supercritical fluid chromatography can be used as the feed pipe.

The first to third flow path opening/closing devices are not particularly limited so long as each of them is a device capable of opening and closing a pipe for forming a flow path of a fluid. For example, known valves each capable of opening and closing a flow path of a fluid flowing in a pipe such as a cylinder operated valve and a glove valve can be used as such flow path opening/closing devices.

The number of the first flow path opening/closing devices to be installed is not particularly limited so long as each of the devices is a device for opening and closing the flow path of the mobile phase formed by the feed pipe, and the number may be one or two or more.

The bypass pipe is a pipe for connecting the upstream side and downstream side of the feed pipe with respect to the first flow path opening/closing device in the direction in which the mobile phase flows in the feed pipe. A pipe similar to the feed pipe can be used as the bypass pipe.

The second and third flow path opening/closing devices are devices for opening and closing flow paths for the sample and the mobile phase in the bypass pipe. The sample can be sealed in the bypass pipe between the second and third flow path opening/closing devices when both the second and third flow path opening/closing devices are closed to the feed pipe. The sample can be pressurized by the mobile phase to be introduced when the second flow path opening/closing device is opened to the feed pipe. A state where the pressurized sample can be injected from the bypass pipe into the feed pipe is established when the second and third flow path opening/closing devices are opened to the feed pipe. A positional relationship between the second and third flow path opening/closing devices is not particularly limited. Any one of the second and third flow path opening/closing devices may be arranged closer to the upstream side in the direction in which the mobile phase flows in the feed pipe. The number of the second flow path opening/closing devices to be installed and the number of the third flow path opening/closing devices to be installed are not particularly limited. The number of the second and third flow path opening/closing devices to be installed may be one or two or more, respectively.

The sample feeding device is not particularly limited so long as it is a device capable of feeding the sample into the bypass pipe between the second and third flow path opening/closing devices. Such device can be constituted by: a sample container storing the sample; a sample feed pipe connecting the sample container and the bypass pipe; a valve capable of opening and closing a flow path of the sample in the sample feed pipe; and a liquid sending device for sending the sample from the sample container to the bypass pipe. Examples of the liquid sending device include: a pump for sending the sample from the sample container to the bypass pipe; and a vacuum pump that reduces the pressure in the bypass pipe for sucking the sample from the sample container.

The controlling device is a device for suppressing a pressure variation in each of the feed pipe and the bypass pipe upon injection of the sample. In addition, the controlling device is a device which controls the second flow path opening/closing device to open one end of the bypass pipe to the feed pipe, controls the third flow path opening/closing device to open the other end of the bypass pipe to the feed pipe after the inside of the bypass pipe has been pressurized, and controls the first flow path opening/closing device in the direction of closing the flow path of the mobile phase formed by the feed pipe. As a result of such control by the controlling device, the sample is pressurized by the mobile phase, and is injected from the other end of the bypass pipe on the downstream side to the feed pipe by the mobile phase to be introduced from the one end of the bypass pipe on the upstream side in the direction in which the mobile phase flows in the feed pipe.

The controlling device preferably controls the first to third flow path opening/closing devices in such a manner that the first to third flow path opening/closing devices each operate at such an appropriate speed that the pressure variation of the mobile phase in the feed pipe can be suppressed.

In the control for opening the one end of the bypass pipe, after the sample has been sealed in the bypass pipe between the second and third flow path opening/closing devices, the controlling device controls the second flow path opening/closing device in such a manner that the one end of the bypass pipe is opened to the feed pipe. When the second flow path opening/closing device is constituted by, for example, multiple valves, the controlling device may control the valves simultaneously, or may control each of the valves individually.

In the control for opening the other end of the bypass pipe, after the sample has been pressurized by the mobile phase introduced into the bypass pipe, the controlling device controls the third flow path opening/closing device in such a manner that the other end of the bypass pipe is opened to the feed pipe. When the third flow path opening/closing device is constituted by, for example, multiple valves, the controlling device may control the valves simultaneously, or may control each of the valves individually.

In the control for the direction of closing the flow path of the mobile phase formed by the feed pipe, the controlling device performs control in which the pipe line of the feed pipe is closed or narrowed by the first flow path opening/closing device in such a manner that the flow of the mobile phase in which the mobile phase passes from the feed pipe to the bypass pipe and flows in the feed pipe again is formed. When the first flow path opening/closing device is constituted by, for example, multiple valves, the controlling device may control the valves simultaneously, or may control each of the valves individually.

The flow path opening/closing devices can be controlled by the controlling device on the basis of, for example, sequence control in which each stage of control is sequentially advanced in accordance with an order defined in advance. In the sequence control, control may be advanced to the next stage on the basis of an actual value such as a result of detection by a pressure gauge provided for each of the feed pipe and the bypass pipe, or may be advanced to the next stage on the basis of a set value for a predetermined time such as a stand-by time enough for the sample to be pressurized by the mobile phase or an operating time for which the pressure variation of the mobile phase due to the opening and closing of a flow path by the flow path opening/closing devices can be prevented.

In addition, the injection device of the present invention preferably further comprises a sample storage portion for storing the sample to be fed from the sample feeding device in the bypass pipe between the second and third flow path opening/closing devices from the viewpoint such as the injection of a constant amount of the sample into the feed pipe or the injection of a large amount of the sample. For example, the sample loop to be ordinarily used in the above-described chromatography can be used as such a sample storage portion.

In addition, the injection device of the present invention may comprise any other component except the above-described devices and the like. An example of the other component is a three-way valve for discharging the mobile phase or the sample in the bypass pipe between the second and third flow path opening/closing devices or in the sample storage portion to the outside.

The present invention can be widely used in techniques for injecting a sample into a pressurized mobile phase. As described above, examples of such the techniques include high performance liquid chromatography and supercritical fluid chromatography.

Any one of various known columns can be used as a column in such the chromatography. Examples of such column include: a particle-filled column obtained by causing particles of silica or the like serving as a carrier to carry a separating agent; and an integrated column obtained by causing a porous continuum such as columnar silica serving as a carrier to carry a separating agent.

An appropriate separating agent in accordance with the kind of a desired substance to be separated from a sample can be used as the separating agent to be carried by the carrier in the column. Such separating agent to be used varies depending on, for example, the structure of a desired substance in a sample. For example, when an optical isomer in a sample is separated, an example of such the separating agent includes a polysaccharide derivative having an optical isomer separating ability.

The mobile phase to be used in the present invention is appropriately selected in accordance with a technique to which the present invention is applied. Examples of such mobile phase include: an organic solvent; a supercritical fluid; a mixed solvent of multiple kinds of organic solvents; and a mixed solvent of an organic solvent and water or of a supercritical fluid and an organic solvent. An example of the supercritical fluid is a fluid obtained by applying a pressure equal to or higher than a critical pressure and/or heat having a temperature equal to or higher than a critical temperature to gas of carbon dioxide, ammonia, sulfur dioxide, hydrogen halide, nitrous oxide, hydrogen sulfide, methane, ethane, propane, butane, ethylene, propylene, halogenated hydrocarbon, water, or the like.

In particular, the present invention is preferably applied to supercritical fluid chromatography from which high productivity of a substance to be separated from a sample is expected owing to the fluid properties of a mobile phase such as high diffusibility and a low viscosity. In addition, the present invention is preferably applied to the separation of an optical isomer from a mixture of optical isomers requiring high separation efficiency and high separation accuracy such as the resolution of an optical isomer from a racemic body.

In addition, in the present invention, the larger the amount of a sample to be injected, the more significant a suppressing effect on a pressure variation upon injection of the sample. Therefore, the present invention is preferably applied to the chromatography in which the amount of a sample to be injected once is large such as the case where separation can be performed favorably and a large amount of a sample can be injected at a time or the case where the solubility of a separation object in a solvent is low and one wishes to inject a large amount of a sample solution at a time. As described above, the present invention can be widely used in industrial production of a substance through separation by means of the above-described chromatography and in analysis by means of the above-described chromatography.

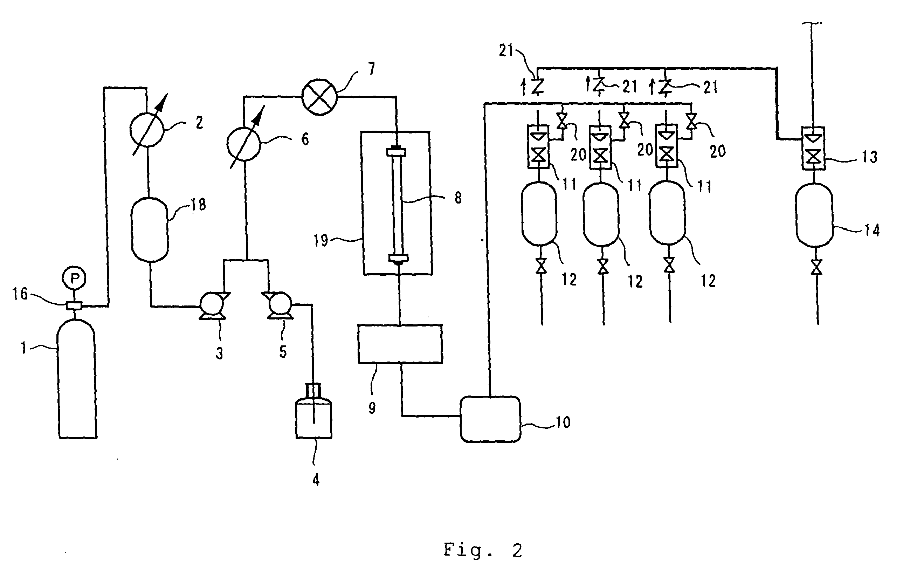

Hereinafter, the present invention will be described on the basis of the drawings. Fig. 2 shows a supercritical fluid chromatographic fractionation apparatus having an injection device in an embodiment of the present invention.

As shown in Fig. 2, the supercritical fluid chromatographic fractionation apparatus comprises: a bomb 1 as a gas feeding device filled with carbon dioxide having a high pressure; a heat exchanger 2 for cooling and liquefying carbon dioxide having a high pressure; a pump 3 for sending the liquefied gas of carbon dioxide produced in the heat exchanger 2; a pump 5 for feeding a solvent fed from a solvent tank 4 into the liquefied gas sent by the pump 3; a heat exchanger 6 for heating a mixed solvent of the liquefied gas and the solvent to turn the liquefied gas into a supercritical fluid; an injection device 7 for injecting a sample into a mobile phase as a mixture of the produced supercritical fluid and the solvent; a column 8 for separating a desired substance in the injected sample; a detector 9 for detecting the substance in the mobile phase that has passed the column 8; a back pressure regulating valve 10 as a pressure regulating device for keeping the pressure in a system ranging from the pump 3 to the detector 9 at a predetermined pressure; multiple vapor liquid separators 11 each intended to subject the mobile phase which has passed the back pressure regulating valve 10 to vapor liquid separation; tanks 12 each intended to store a liquid that has been subj ected to vapor liquid separation; a purifying device 13 for additionally removing a liquid from a gas that has been subjected to vapor liquid separation; and a tank 14 for storing the liquid removed from the gas by the purifying device 13.

The bomb 1, the heat exchanger 2, the pump 3, the heat exchanger 6, the injection device 7, the column 8, the detector 9, and the back pressure regulating valve 10 are connected in series using pipes. The vapor liquid separators 11 are connected by using pipes in parallel with the back pressure regulating valve 10 and the purifying device 13. Meanwhile, the solvent tank 4 and the pump 5 are connected by using a pipe. The pump 5 is connected to a pipe for connecting the pump 3 and the heat exchanger 6 using a pipe. Each of the vapor liquid separators 11 and each of the tanks 12 are connected by using a pipe. The purifying device 13 and the tank 14 are connected by using a pipe. Hereinafter, a pipe to be connected to the column 8 from the heat exchanger 6 via the injection device 7 is particularly referred to as the "feed pipe" in some cases.

A pressure regulating valve 16 for releasing carbon dioxide from the bomb 1 at a predetermined pressure is provided between the bomb 1 and the heat exchanger 2. A buffer tank 18 for receiving the liquefied gas produced in the heat exchanger 2 is provided between the heat exchanger 2 and the pump 3. In addition, the column 8 is stored in a column oven 19 for regulating the temperature in the column 8 to a predetermined temperature.

A valve 20 corresponding to each of the vapor liquid separators 11 is provided between the back pressure regulating valve 10 and each of the vapor liquid separators 11 in such a manner that the destination of the mobile phase fed from the back pressure regulating valve 10 can be selected. A check valve 21 for preventing the back flow of a gas from the side of the purifying device 13 to each of the vapor liquid separators 11 is provided between each of the vapor liquid separators 11 and the purifying device 13 in correspondence with each of the vapor liquid separators 11.

Each of the pumps 3 and 5 is a pump capable of sending a constant amount of a liquid. The back pressure regulating valve 10 is a valve that keeps a pressure on a side close to the column 8, that is the pressure of a system ranging from the pumps 3 and 5 to the back pressure regulating valve 10 (system on a primary side) at a predetermined pressure (for example, 20 MPa).

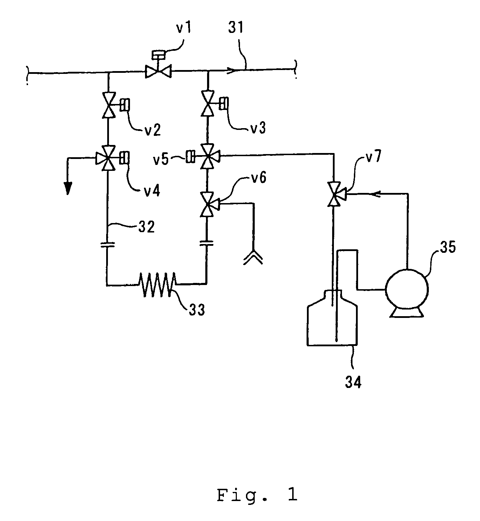

As shown in Fig. 1, the injection device 7 comprises: a feed pipe 31 for feeding the mobile phase from the heat exchanger 6 into the column 8; a two-way valve v1 as the first flow path opening/closing device for opening and closing a flow path of the mobile phase formed by the feed pipe 31; a bypass pipe 32 both ends of which are connected to the feed pipe 31 on an upstream side and a downstream side with respect to the two-way valve v1; two-way valves v2 and v3 as the second and third flow path opening/closing devices for opening and closing a flow path of the mobile phase formed by the bypass pipe 32; a sample loop 33 as the sample storage portion provided for the bypass pipe 32 between the two-way valves v2 and v3; a three-way valve v4 provided for the bypass pipe 32 between the two-way valve v2 and the sample loop 33; a three-way valve v5 provided for the bypass pipe 32 between the sample loop 33 and the two-way valve v3; and a controlling device (not shown) for controlling the opening and closing of each of these valves.

The three-way valve v4 is a valve capable of arbitrarily connecting the bypass pipe 32 to the two-way valve v2, the bypass pipe 32 to the sample loop 33, and a pipe in communication with the outside of the device with one another. The three-way valve v5 is a valve capable of arbitrarily connecting the bypass pipe 32 to the sample loop 33, the bypass pipe 32 to the two-way valve v3, and a sample feed pipe in communication with a pump 35 and a sample container 34 with one another.

A three-way valve v6 is provided for the bypass pipe 32 between the sample loop 33 and the three-way valve v5. The three-way valve v6 is a valve capable of arbitrarily connecting the bypass pipe 32 to the sample loop 33, the bypass pipe 32 to the three-way valve v5, and a pipe the tip of which is provided with a port for feeding a sample with one another. The three-way valve v6 is intended to connect a device capable of injecting a predetermined amount of a sample such as a syringe to the port so that the sample can be fed from a site except the sample container 34 into the sample loop 33.

A three-way valve v7 is provided for the sample feed pipe between the pump 35 and the three-way valve v5. The three-way valve v7 is a valve capable of arbitrarily connecting the sample feed pipe to the pump 35, the sample feed pipe to the three-way valve v5, and a pipe for returning a liquid to the sample container 34 with one another. In ordinary cases, the three-way valve v7 connects the sample feed pipe to the pump 35 with the sample feed pipe to the three-way valve v5.

In this embodiment, the sample feeding device is constituted by the sample container 34, the pump 35, the sample feed pipe, the three-way valve v5, the three-way valve v7, and the pipe for returning a liquid. In addition, in this embodiment, each of the above-described two-way and three-way valves is an automatic valve. The controlling device is a device for controlling those valves, and is a device for additionally controlling the opening and closing of each of the valves 20 in accordance with a result of detection by the detector 9 as well as the opening and closing of each of the above-described two-way valves and the switching of each of the three-way valves.

In addition to those components described above, valves such as a valve, a check valve, and a safety valve, various detecting devices such as a pressure gauge, a thermometer, and a flow meter, and peripheral devices such as a heater, a brine chiller, and an accumulator are provided for appropriate sites of the supercritical fluid chromatographic fractionation apparatus although they are not shown.

Hereinafter, the operational state of the supercritical fluid chromatographic fractionation apparatus will be described. First, a flow commencing on the production of a mobile phase and ending on the separation of a desired substance in the supercritical fluid fractionation chromatographic apparatus will be described, and then the injection of a sample by the injection device 7 will be described.

When the pressure regulating valve 16 is regulated in the supercritical fluid chromatographic fractionation apparatus, carbon dioxide is fed from the bomb 1 into the heat exchanger 2 at a predetermined pressure (for example, 4 MPa). Carbon dioxide is cooled and liquefied in the heat exchanger 2.

The liquefied gas of carbon dioxide produced in the heat exchanger 2 is stored in the buffer tank 18, and is fed by the pump 3 into the heat exchanger 6. The liquefied gas to be fed into the heat exchanger 6 is fed with an organic solvent such as a lower alcohol sent from the solvent tank 4 through the pump 5, whereby the liquefied gas and the organic solvent are mixed. This mixed solvent is fed into the heat exchanger 6.

The heat exchanger 6 heats the mixed solvent, whereby the liquefied gas in the mixed solvent is turned into a supercritical fluid. In addition, the temperature of a mobile phase obtained by mixing the supercritical fluid and the solvent is regulated to the temperature of the column 8 set by the column oven 19 (for example, 40°C). A solution of a separation object is injected as a sample from the injection device 7 into the mobile phase the temperature of which has been regulated.

The sample injected from the injection device 7 is sent to the column 8, and various substances in the sample are divided in association with their passage through the column 8.

The substances in the mobile phase that has passed the column 8 are detected by the detector 9. The mobile phase that has passed the detector 9 is sent to the back pressure regulating valve 10. The passing of the mobile phase through the back pressure regulating valve 10 reduces the pressure of the mobile phase. On the other hand, the controlling device opens the predetermined valve 20 and closes the other valves 20 in accordance with the result of the detection by the detector 9. The mobile phase that has passed the back pressure regulating valve 10 is supplied to the predetermined vapor liquid separator 11.

In the vapor liquid separator 11, the mobile phase fed into the separator is subjected to vapor liquid separation. As a result, most of carbon dioxide that has constituted the supercritical fluid is released as a vapor phase from the mobile phase, and the organic solvent containing a desired substance is stored as a liquid phase in the tank 12. The pressure of the organic solvent stored in the tank 12 is released, or the organic solvent is additionally concentrated under reduced pressure, whereby the desired substance is taken out.

The carbon dioxide gas released from the mobile phase is sent to the purifying device 13. In the purifying device 13, as in the case of, for example, each of the vapor liquid separators 11, the carbon dioxide gas fed into the device is subjected to vapor liquid separation. As a result, the carbon dioxide gas and a small amount of the organic solvent in the carbon dioxide gas are separated from each other. The carbon dioxide gas is released to, for example, the outside air, and the separated organic solvent is stored in the tank 14.

After that, each of the valves 20 is appropriately opened or closed in accordance with the substance to be detected by the detector 9, whereby the desired substance in the sample is fractionated. It should be noted that the back flow of a gas from the purifying device 13 to each of the vapor liquid separators 11 or the inflow of a gas from one of the vapor liquid separators 11 to any one of the other vapor liquid separators 11 is prevented by the check valve 21.

Next, the injection of a sample by the injection device 7 will be described. Before the sample is injected, the two-way valve v1 is opened, and the two-way valves v2 and v3 are closed. In addition, the three-way valve v4 connects the two-way valve v2 with the sample loop 33, the three-way valve v5 connects the sample loop 33 with the two-way valve v3, the three-way valve v6 connects the sample loop 33 with the three-way valve v5, and the three-way valve v7 connects the pump 35 with the three-way valve v5. In this state, a mobile phase flows in the feed pipe 31.

In addition, the controlling device is set to control the opening and closing of each of the two-way valves v1 to v3 at a speed corresponding to a stroke time (time required for each of the valves in a fully closed stated to be in a fully opened state or for each of the valves in a fully opened stated to be in a fully closed state) of 0.01 to 60 seconds, preferably 0.01 to 10 seconds, or more preferably 0.05 to 5 seconds in order to prevent a reduction in pressure of the mobile phase in the feed pipe 31.

First, the controlling device seals the sample in the sample loop 33. The controlling device controls the three-way valve v5 so that the three-way valve v7 and the three-way valve v6 are connected. As a result, the sample stored in the sample container 34 is fed by the pump 35 into the sample loop 33. At this time, a system outside the device and the sample loop 33 may be connected through the control of the three-way valve v4. With the connection, a gas in the pipe ranging from the sample feed pipe to the sample loop 33 is discharged to the outside of the device at the time of the feeding of the sample.

After a predetermined amount of the sample has been fed into the sample loop 33, the controlling device controls the three-way valve v5 so that the three-way valve v6 and the two-way valve v3 are connected and the pump 35 is stopped. At this time, the sample feed pipe and the pipe for returning a liquid may be connected by the three-way valve v7. With this connection, the sample in the sample feed pipe ranging from the three-way valve v5 to the pump 35 is returned to the sample container 34 through the pipe for returning a liquid, and the sealing of the sample in the sample feed pipe is prevented.

After a predetermined amount of the sample has been sealed in the sample loop 33, the controlling device pressurizes the sealed sample. While the controlling device gradually opens the two-way valve v2 to suppress a reduction in pressure of the mobile phase in the feed pipe 31, the controlling device introduces the mobile phase from the feed pipe 31 into the sample loop 33. At this time, the sample in the sample loop 33, which is pressed by the mobile phase, is pressurized by the mobile phase to be introduced because the two-way valve v3 is closed. Since the pressure of the mobile phase in the feed pipe 31 is kept constant by the back pressure regulating valve 10, the sample is pressurized to have a pressure equal to the pressure of the mobile phase in the feed pipe 31.

After the sample has been pressurized by the introduction of the mobile phase, the controlling device gradually opens the two-way valve v3 and closes the two-way valve v1. It should be noted that the two-way valve v3 is opened after the lapse of a time enough for the sample to be pressurized by the introduced mobile phase from the opening of the two-way valve v2. With this control, the flow of the mobile phase in which the mobile phase passes from the feed pipe 31 to the bypass pipe 32 and returns to the feed pipe 31 is formed, and the flow injects the sample into the feed pipe 31.

After the sample has been injected into the feed pipe 31, the controlling device gradually closes the two-way valves v2 and v3, and gradually opens the two-way valve v1 at the same time. A flow path of the mobile phase is switched from the bypass pipe 32 to the feed pipe 31 by the opening and closing of those two-way valves.

After the flow path of the mobile phase has been switched, the controlling device controls the three-way valve v4 so that the bypass pipe 32 and the pipe in communication with the outside of the device are connected. With this control, the mobile phase in a pressurized state trapped in the bypass pipe 32 ranging from the two-way valve v2 to the two-way valve v3 and the sample loop 33 is discharged to the outside of the device.

In this embodiment, the pump 35 has been used for feeding a sample. The sample may be fed into the sample loop 33 by: providing a decompression device such as a vacuum pump for the pipe in communication with the outside of the device in the three-way valve v4 instead of the pump 35; and taking up the sample in the sample container 34 from the side of the three-way valve v4.

In addition, in this embodiment, the two-way valves v2 and v3 have been used as the second and third flow path opening/closing devices. Three-way valves may also be used as the devices. As described above, in the case where one or both of the second and third flow path opening/closing devices can communicate the bypass pipe 32 between the second and third flow path opening/closing devices and any other systems with each other while closing the flow path of the mobile phase formed by the bypass pipe 32 to the feed pipe 31, an air bubble in the pressurized sample sealed in the bypass pipe 32 can be removed. Accordingly, the case is additionally effective in improving the efficiency of the separation of the desired substance in the sample. The case is particularly effective when the amount of a sample to be injected becomes larger like industrial production.

In addition, in this embodiment, the speed at which each of the two-way valves v1 to v3 is opened or closed, and the stand-by time commencing on the opening of the two-way valve v2 and ending on the opening of the two-way valve v3 have been set in advance. The controlling device may be caused to determine the speed at which each of the two-way valves v1 to v3 is opened or closed, and the stand-by time at any time on the basis of a value detected by a pressure gauge provided for each of the feed pipe 31 and the bypass pipe 32.

In addition, in this embodiment, different samples may be alternately fed into the sample loop 33 by constituting a constitution similar to the sample feeding device instead of the port. According to such embodiment, each of different kinds of samples can be individually fed into the sample loop 33, and the samples can be injected into the feed pipe 31 and subjected to separation in a column. As a result, multiple kinds of substances can be fractionated from multiple kinds of samples using a single column. The number of the bypass pipes 32 or the like described above to be provided may be two or more from such viewpoint.

In addition, Fig. 1 shows that such connection between the feed pipe 31 and the bypass pipe 32 that the flow path of the mobile phase formed by the feed pipe 31 and the flow path of the mobile phase formed by the bypass pipe 32 are orthogonal to each other at a connecting point between the feed pipe 31 and the bypass pipe 32. In this embodiment, the feed pipe 31 and the bypass pipe 32 may be connected in such a manner that the flow path of the mobile phase formed by the feed pipe 31 and the flow path of the mobile phase formed by the bypass pipe 32 are connected in a linear fashion at the connecting point. According to such embodiment, the flow of a fluid,between the feed pipe 31 and the bypass pipe 32 improves in smoothness. The improvement is effective in injecting and feeding the sample from the bypass pipe 32 into the feed pipe 31 with improved smoothness.

In this embodiment, the sample is sealed in the bypass pipe 32, the sample is pressurized by introducing the mobile phase in the feed pipe 31 from one end of the bypass pipe 32, and the pressurized sample is injected from the other end of the bypass pipe 32 into the feed pipe 31. In view of this, the pump 3 for feeding the mobile phase into a column is used as a power for injecting the sample. Accordingly, the injection device can be constituted by using a simple constitution, and the sample can be injected into the mobile phase through an easy operation. In addition, no sample waste occurs because the sample in the bypass pipe 32 is completely injected into the feed pipe 31.

In addition, in this embodiment, the sample is pressurized by the mobile phase in the feed pipe 31 the pressure of which is kept at a constant pressure by the back pressure regulating valve 10, so the sample can be pressurized to have a pressure equal to the pressure of the mobile phase in the feed pipe 31. In addition, the sample is injected into the mobile phase in the feed pipe 31, so a pressure variation upon injection of the sample can be suppressed.

In addition, in this embodiment, the pipe in communication with the outside of the device is constituted so that the pipe can be connected to the bypass pipe 32 by the three-way valve v4. As a result, the mobile phase sealed in the bypass pipe 32 after injection can be discharged from the bypass pipe 32. Therefore, a sample can be fed into the sample loop 33 without the use of any high-output pumps that pumps the sample toward a high-pressure system. In addition, the mixing of the mobile phase into the sample container 34 can be prevented.

### INDUSTRIAL APPLICABILITY

In the present invention, a sample is sealed in a bypass pipe, the sample is pressurized by introducing a mobile phase in a feed pipe from one end of the bypass pipe, and the pressurized sample is injected from the other end of the bypass pipe into the feed pipe. As a result, no sample waste occurs because the mobile phase introduced from the one end of the bypass pipe is injected from the other end of the bypass pipe into the feed pipe together with the sample. In addition, the present invention can be easily constituted by the bypass pipe, a device for opening and closing a flow path of a fluid in each of the bypass pipe and the feed pipe, and a device for feeding the sample into the bypass pipe. In addition, in the present invention, a pressure variation upon injection of the sample can be suppressed because the pressurized mobile phase in the feed pipe is used for pressurizing the sample.

In the present invention, providing the bypass pipe with a sample storage portion for sealing a sample exerts an improved effect on the injection of a constant amount of a sample and on the injection of a large amount of a sample.

In addition, the present invention is applicable to supercritical fluid chromatography in which a mobile phase contains a supercritical fluid and to chromatography for separating an optical isomer.

## Claims

1. A method of injecting a sample comprising a desired substance into a pressurized mobile phase upon separation of the desired substance in the sample in the mobile phase by passage of the mobile phase through a column, wherein the method comprises the steps of:
sealing the sample in a bypass pipe both ends of which are connected to a feed pipe for feeding the mobile phase into the column;
pressurizing the sample sealed in the bypass pipe by opening one end of the bypass pipe to the feed pipe and by introducing the mobile phase from the feed pipe into the bypass pipe; and
injecting the pressurized sample into the feed pipe by opening the other end of the bypass pipe to the feed pipe.

2. The method according to claim 1, wherein the sample is sealed in a sample storage portion provided for the bypass pipe in the sealing step.

3. The method according to claim 1 or 2, wherein the mobile phase comprises a supercritical fluid.

4. The method according to any one of claims 1 to 3, wherein the sample comprises a mixture of two or more kinds of optical isomers.

5. A device for use in injection of a sample comprising a desired substance into a pressurized mobile phase upon separation of the desired substance in the sample in the mobile phase by passage of the mobile phase through a column, wherein the device comprises:
a feed pipe for feeding the mobile phase into the column;
a first flow path opening/closing device for opening and closing a flow path of the mobile phase formed by the feed pipe;
a bypass pipe both ends of which are connected to the feed pipe on an upstream side and a downstream side with respect to the first flow path opening/closing device;
second and third flow path opening/closing devices for opening and closing a flow path of the mobile phase formed by the bypass pipe;
a sample feeding device for feeding the sample into the bypass pipe between the second and third flow path opening/closing devices; and
a controlling device for controlling the first to third flow path opening/closing devices,
wherein the controlling device controls the second flow path opening/closing device to open one end of the bypass pipe to the feed pipe, controls the third flow path opening/closing device to open the other end of the bypass pipe to the feed pipe after an inside of the bypass pipe has been pressurized, and controls the first flow path opening/closing device in a direction of closing the flow path of the mobile phase formed by the feed pipe.

6. The device according to claim 5, wherein the device further comprises a sample storage portion for storing the sample to be fed from the sample feeding device in the bypass pipe between the second and third flow path opening/closing devices.

7. The device according to claim 5 or 6, wherein the controlling device controls the third flow path opening/closing device after a predetermined time period from control of the second flow path opening/closing.

8. The device according to any one of claims 5 or 7, wherein the mobile phase comprises a supercritical fluid.

9. The device according to any one of claims 5 to 8, wherein the sample comprises a mixture of two or more kinds of optical isomers.
